# EUROPEAN PATENT SPECIFICATION

(11) **EP 1 604 495 B1**
(45) Date of publication and mention of the grant of the patent: **02.08.2006**
(21) Application number: 04715989.2
(22) Date of filing: 01.03.2004
(51) Int. Cl.: H04L 12/56

(54) **MAINTAINING UPLINK CONTROL VIA THE INTERCEPTION OF SIGNALS FOR MOBILE TERMINALS IN DIRECT MODE PEER-TO-PEER COMMUNICATION**
UNTERHALTEN DER KONTROLLE IN AUFWÄRTSRICHTUNG DURCH ABFANGEN VON SIGNALEN VON MOBILEN ENDGERÄTEN IN DIREKTER MODUS PEER-TO-PEER KOMMUNIKATION
COMMANDE D'UNE LIAISON MONTANTE PAR INTERCEPTION DES SIGNAUX DE TERMINAUX MOBILES EN COMMUNICATION POSTE-A-POSTE

(30) Priority: 07.03.2003 CN 03119893
(43) Date of publication of application: 14.12.2005
(73) Proprietor: Koninklijke Philips Electronics N.V., 5621 BA Eindhoven (NL)
(72) Inventor: JIA, Qunli, Philips Electronics China, 200070 Shanghai (CN); SUN, Li, Philips Electronics China, 200070 Shanghai (CN); MA, Ni, Philips Electronics China, 200070 Shanghai (CN); ZHANG, Xuejun, Philips Electronics China, 200070 Shanghai (CN); CHENG, Jiang, Philips Electronics China, 200070 Shanghai (CN); PENG, Fang, Philips Electronics China, 200070 Shanghai (CN)
(74) Representative: Eleveld, Koop Jan
(86) International application number: PCT/IB2004/050180
(87) International publication number: WO 2004/077918

(56) References cited:
- EP-A- 1 221 791
- US-A1- 2002 080 750
- US-B1- 6 275 500
- US-B2- 6 477 384
- GERLA M ET AL: "UMTS-TDD: a solution for internetworking bluetooth piconets in indoor environments" IEEE COMPUTER SOCIETY; PROCEEDINGS OF THE SEVENTH INTERNATIONAL SYMPOSIUM ON COMPUTERS AND COMMUNICATIONS (ISCC'02), 1 July 2002 (2002-07-01), pages 825-830, XP010595854
- CHINA WIRELESS TELECOMMUNICATION STANDARD: "3G DIGITAL CELLULAR TELECOMMUNICATIONS SYSTEM; USER EQUIPMENT-BASE STATION SUBSYSTEM (UE-BSS) INTERFACE; CHANNEL STRUCTURES AND ACCESS CAPABILITIES; CWTS TSM 04.03 V1.1.0" CHINA WIRELESS TELECOMMUNICATION STANDARD, [Online] April 2001 (2001-04), pages 1-11, XP002285384 Retrieved from the Internet: URL:www.cwts.org> [retrieved on 2004-06-22]
- BLUETOOTH SPECIAL INTEREST GROUP: "BLUETOOTH SPECIFICATION; VERSION 1.1; CORE" SPECIFICATION OF THE BLUETOOTH SYSTEM, [Online] 22 February 2001 (2001-02-22), pages 1-13,94-123,216-222,1064-1069, XP002285385 Retrieved from the Internet: URL:www.bluetooth.org> [retrieved on 2004-06-22]

## Description

### BACKGROUND OF THE INVENTION

The invention relates generally to wireless communications systems, and more particularly to self-organizing wireless communication network systems for maintaining uplink control for mobile terminals in peer-to-peer communication.

Peer-to-peer communication between two mobile terminals provides a direct link between the two mobile terminals in public land mobile network. When the direct link is established, the dedicated links between the base station and mobile terminals can be disconnected, while the common control channel (CCCH) is maintained. This will save at least two radio channels for the system and reduce the end-to-end delay.

Among existing 3G systems, the TDD CDMA system is the most suitable system for the application of peer-to-peer communication, because the same carrier frequency is used in both uplink and downlink communications, which will simplify the RF module of the mobile terminal. Additionally, the application of peer-to-peer communication technology will overcome some inherent shortcomings of the TDD CDMA system, such as the shortage of spreading code, small coverage, etc. An example of the TDD CDMA system is the TD-SCDMA system, which has gained more popularity in China.

After a direct link is established between two mobile terminals, the dedicated channels between the base station and the mobile terminals will be disconnected. At this time, the base station can still send control information to the mobile terminals through downlink CCCH. In the normal case during the peer-to-peer communication, the base station will not need to receive information from the two mobile terminals and cannot obtain information about the midamble and control information from the mobile terminals. The mobile terminals also cannot transmit control information to the base station through dedicated uplink channels. If the mobile terminals need to transmit any control information to the base station, the only avenue is through the Random Access Channel (RACH). However, this channel is an uplink common channel, and all mobile terminals will have to contend to use it. Thus, any transmission of control information through this channel cannot ensure that the information will arrive the base station in a timely manner. This may cause serious problems. For example, if the mobile terminals determine that their direct communication link can no longer function properly and thus need the base station to provide assistance to allow them to return to the conventional communication mode, the mobile terminals cannot easily convey the relevant control information to the base station to take appropriate actions. Consequently, the mobile terminals may have to terminate the current communication and the restart it with the assistance from the base station.

Document US-B1-6 275 500 describes a Bluetooth network, where the master performs the functions of vectoring slaves to other frequencies, modulation formats, hop sequences or spread sequences, in order for them to get involved in independent direct peer-to-peer communication. Further control is achieved by periodical polling of the slaves.

Document EP-A-1 221 791 describes another Bluetooth network, where direct peer-to-peer communication between two slaves is implemented by packet routing via the master, acting as a central node. This is possible since the packet header is modified to include the destination slave's address and its payload region is modified to include the source slave's address.

Document US-B2-6 477 384 describes the problematic of "unauthorised" listening of transmissions between two mobile stations involved in direct mode communication and a possible solution based on performing presence inquiries.

Therefore, there is a need for an improved system that enables mobile terminals in peer-to-peer communication to have an opportunity to timely transmit control information to the base station whenever necessary.

### SUMMARY OF THE INVENTION

The present invention provides a wireless communication network system that addresses the limitations associated with the conventional system and maintains uplink control for the mobile terminal in peer-to-peer communication.

According to one embodiment of the invention, upon receiving a request from a mobile terminal for establishing peer-to-peer communication with another mobile terminal, the network system determines whether a reliable direct communication link can be set up between the mobile terminals. Upon determining that a reliable direct communication can be set up, the network system transmits information including control commands to the mobile terminals for establishing direct communication. The information includes a burst structure type, with the burst structure containing at least one section for carrying control information intended for the network system. After the direct communication is established, the network system continuously listens to signals communicated between the mobile terminals to receive bursts. The network system demodulates received bursts that are communicated between the two mobile terminals to determine whether a received burst contains control information intended for the network system. If control information intended for the network system is included in a received burst, the network performs a corresponding function. In this way, the network system can effectively maintain uplink control for the mobile terminals in peer-to-peer communication.

Other objects and attainments together with a fuller understanding of the invention will become apparent and appreciated by referring to the following description and claims taken in conjunction with the accompanying drawings.

### BRIEF DESCRIPTION OF THE DRAWINGS

The invention is explained in further detail, and by way of example, with reference to the accompanying drawings wherein:
FIG. 1 shows an overview of peer-to-peer communication in a wireless communication network system environment, according to one embodiment of the invention;
FIG. 2 shows a standard subframe structure used in the TDSCDMA system;
FIG. 3 shows a standard burst structure used in the TD-SCDMA system;
FIG. 4 shows a burst structure according to one embodiment of the invention;
FIG. 5 shows a burst structure according to another embodiment of the invention;
FIG. 6 shows a burst structure according to yet another embodiment of the invention;
FIG. 7 illustrates a detailed process performed by a wireless communication network system (e.g., UTRAN) for establishing peer-to-peer communication between two mobile terminals, according to one embodiment of the invention;
FIG. 8 illustrates a detailed process performed by a mobile terminal for maintaining the uplink control with the UTRAN in peer-to-peer communication, according to one embodiment of the invention; and
FIG. 9 illustrates basic components of a mobile terminal in accordance with one embodiment of the invention.

Throughout the drawings, the same reference numerals indicate similar or corresponding features or functions.

### DETAILED DESCRIPTION OF THE PREFERRED EMBODIMENTS

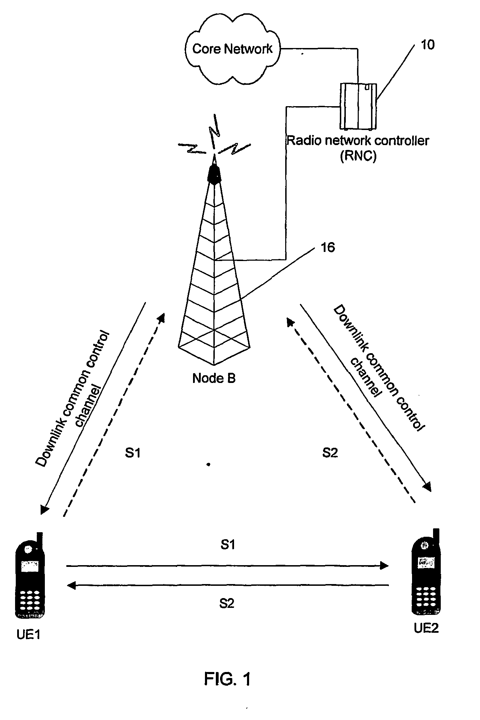

FIG. 1 shows an overview of peer-to-peer communication in a wireless communication network system (e.g., Universal Terrestrial Radio Access Network (UTRAN)) environment, according to one embodiment of the invention. In FIG. 1, the UTRAN comprises a radio network controller (RNC) 10 and a Node B 16 (i.e., a base station). After receiving a request from a mobile terminal (UE1 or UE2) for peer-to-peer communication with another mobile terminal, the UTRAN will determine whether the distance between UE1 and UE2 is within the acceptable range for peer-to-peer communication. If the distance is within the range, the UEs will be requested to test the relevant channel characteristics. If the channel characteristics meet the requirements for direct communication, the mobile terminals will be allowed to set up a direct communication link. A more detailed description of setting up P2P communication is disclosed in a co-pending patent application entitled "Method and System for Establishing Peer-to-Peer Communication in Wireless Communication" filed by Koninklijke Philips Electronics N.V., on 24 February 2004, Applicant's Docket No. PHCN030003WO, Application Serial No. PCT/IB2004/050137.

After the direct communication is established, the UTRAN disconnects the dedicated channels between base station and mobile terminals, while it still listens to the signals communicated between UE1 and UE2 (as illustrated by the dash lines in FIG. 1), even though they are not intended for the UTRAN. This gives an opportunity to the UTRAN to use the midamble information received to make channel estimation and transmit the SS (Synchronization Shift) command to the UEs to enable the UEs to adjust their transmission time accordingly. It also provides an opportunity to the UEs to send control information to the UTRAN in certain situations where, for example, the two UEs have to disconnect the direct communication link and return to the conventional communication mode, due to a change in the channel characteristics. Thus, if any of the UEs wants to send control information to the UTRAN, the control information should be included in the bursts communicated through the dedicated channels between the two UEs.

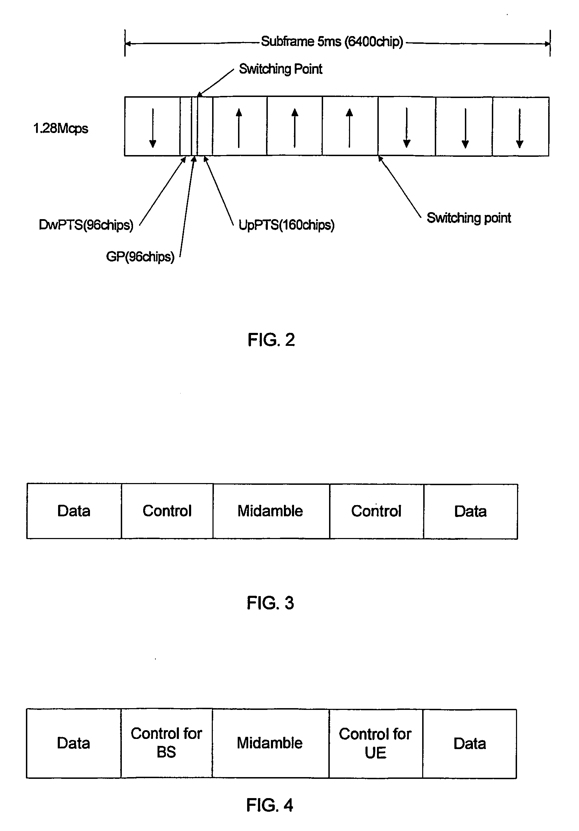

FIG. 2 shows a standard subframe structure used in the TD-SCDMA system. The subframe structure includes seven time slots (illustrated with upward and downward arrows) for transmitting or receiving seven bursts, respectively. Each burst has a standard structure, as illustrated in FIG. 3 and includes two data sections, two control sections and a midamble section that divides the two data and control sections. Each data section is used to carry service information; and each control section is used to carry control information such as Transmission Format Combination Indication (TFCI), Transmission Power Control (TPC), etc. In the TD-SCDMA system, in downlink, the control section may include the SS command that is used for requesting a mobile terminal to adjust the transmission time.

FIG. 4 shows a burst structure, also referred to as burst type, according to one embodiment of the invention. In this structure, one control section is used to carry control information intended for the base station (BS) (e.g., Node B) or the UTRAN, while the other control section is used to carry control information intended for the other UE. Of course, the relative positions of these two control sections may be reversed.

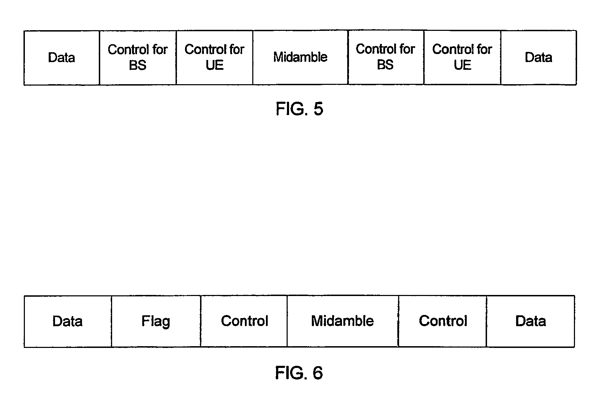

FIG. 5 shows an alternative burst structure according to another embodiment of the invention. In this burst structure, each control section is further divided into two sub-sections for carrying the control information intended for the BS and the other UE, respectively.

FIG. 6 shows a burst structure according to yet another embodiment of the invention. In this burst structure, the two control sections are time shared by the BS and the other UE, since not all bursts need to include the control information intended for both the BS and the UE at the same time. A flag section is thus used to indicate whether the control information is intended for the BS or the UE. For example, if the flag is set to 0, the control information is intended for the UE. On the other hand, if the flag is set to 1, the control information is intended for the BS. The UTRAN will inform the UEs which burst structure type is used through Radio Resource Control (RRC) signaling when the direct communication link is established between them.

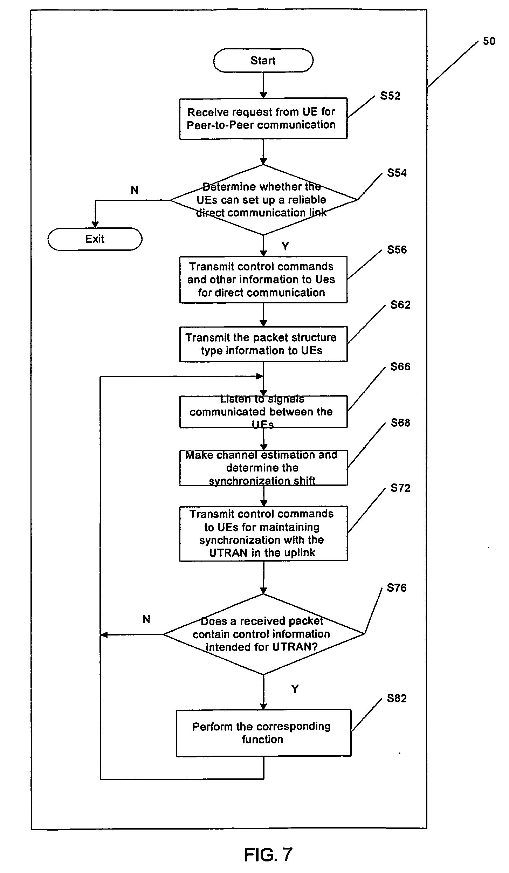

FIG. 7 illustrates a detailed process 50 performed by the UTRAN for establishing peer-to-peer communication between two mobile terminals UE1 and UE2, according to one embodiment of the invention. Upon receiving a request from a UE for peer-to-peer communication (step S52), the UTRAN determines whether the UEs can set up a reliable direct communication link, using conventional technologies (step S54). If a reliable direct communication link can be set up, the UTRAN will transmit control commands to each UE to initiate peer-to-peer communication and suspend the dedicated uplink and downlink channels of each UE through downlink signaling (step S56). In the meantime, the UTRAN also transmits the burst structure to the UEs (step S62).

The UTRAN then listens to the signals communicated between the UEs (step S66) and uses the midamble in the received burst to make channel estimation and determine the Synchronization Shift the UE should adjust (step S68). If the Synchronization Shift should be adjusted, the UTRAN transmits control commands with the synchronization adjustment information to the UEs through the downlink CCCH for maintaining synchronization with the UTRAN in uplink (step S72). The UTRAN continuously demodulates received bursts that are communicated between the UEs to determine whether a received burst contains control information intended for the UTRAN (step S76). If the control information is intended for the UTRAN, the UTRAN will perform the corresponding function (step S82). For example, the UTRAN will need to change the uplink control speed in response to the control information indicating a large decline in the Signal-to-Interference (SIR) ratio of the dedicated channels between the UEs. On the other hand, if the burst does not contain any control information intended for the UTRAN, steps S66 through S76 will be repeated. In this way, the UTRAN continuously listens to the signals communicated between the UEs, demodulates received bursts and acts whenever appropriate, based on the control information contained in the received bursts.

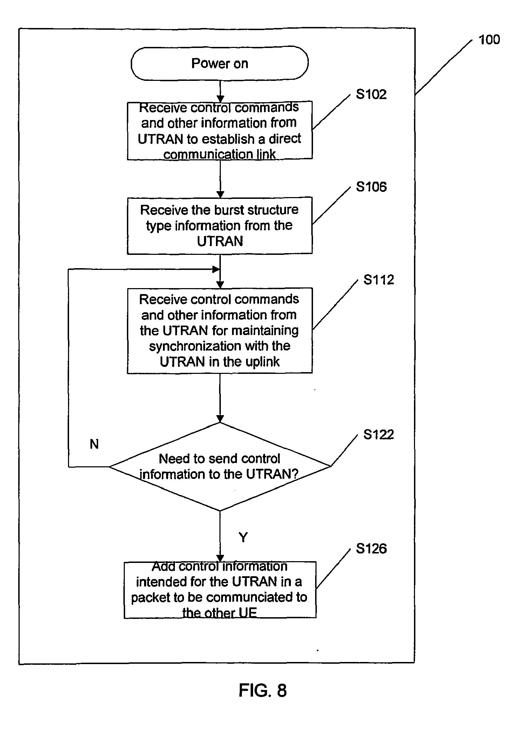

FIG. 8 illustrates a detailed process 100 performed by a mobile terminal for maintaining the uplink control with the UTRAN in peer-to-peer communication, according to one embodiment of the invention. After power on by a UE and the UTRAN determines that a reliable direct communication link can be set up between the two UEs, each UE will receive control commands and other information from the UTRAN to establish a direct communication link (step S102). Each UE also receives the information about the burst structure type from the UTRAN that is recognizable by the UTRAN (step S106). Each UE further receives control commands and other information from the UTRAN for maintaining synchronization with the UTRAN in the uplink (step S112). Each UE will constantly determine whether it needs to send control information to the UTRAN (step S122). When the UE requires the UTRAN to take certain actions, such as to change the uplink control speed, it will add the appropriate control information intended for the UTRAN in one or more bursts to be communicated to the other UE (step S126). However, if the UTRAN is not requested for taking any actions, no control information intended for the UTRAN will be included in bursts communicated to the other UE, and steps S112 through S122 will be repeated.

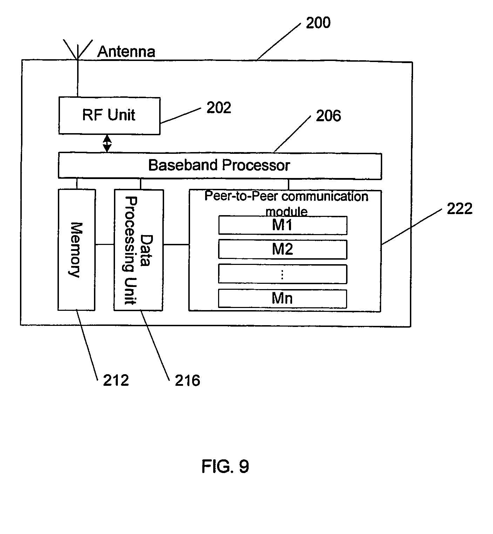

FIG. 9 illustrates basic components of a mobile terminal 200 in accordance with one embodiment of the invention. Mobile terminal 200 includes a RF unit 202, a baseband processor 206, a memory 212, a daa processing unit 216, and a plurality of peer-to-peer communication modules 222 (i.e., modules M1 through Mn). Communication modules 222 implement the various steps shown in FIG. 8. Each of modules 222 may be either a software module or a combination of software and hardware module. In a preferred embodiment of the invention, the hardware of the existing mobile terminal remains unchanged, while the communication modules 222 are all software modules.

The UTRAN used in the invention has a similar structure as that shown in FIG. 9, and each of the corresponding modules 222 may be either a software module or a combination of software and hardware module for implementing the various steps shown in FIG. 7. Thus, its structure will not be separately illustrated. In a preferred embodiment of the invention, the hardware of the existing mobile terminal remains unchanged, while the corresponding modules 222 are all software modules.

In the above, the invention has been illustrated in conjunction with a UTRAN in a TDD based system. However, it is not limited to the TDD based system. In fact, any wireless network system may be used in conjunction with the present invention.

While the invention has been described in conjunction with specific embodiments, it is evident that many alternatives, modifications and variations will be apparent to those skilled in the art in light of the foregoing description. Accordingly, it is intended to embrace all such alternatives, modifications and variations as fall within the scope of the appended claims.

## Claims

1. A method performed by a wireless communication network system for maintaining uplink control for mobile terminals (UE1, UE2), the method comprising the steps of:
receiving a request from a mobile terminal for establishing peer-to-peer communication with another mobile terminal (S52);
determining whether a reliable direct communication link can be set up between the mobile terminals (S54);
if a reliable direct communication link can be set up between the mobile terminals, transmitting information including control commands to the mobile terminals for establishing direct communication (S56); **characterised in that**
after the direct communication is established between the mobile terminals, continuously listening to signals communicated between the mobile terminals to receive bursts (S66);
demodulating received bursts that are communicated between the two mobile terminals to determine whether a received burst contains control information intended for the network system (S76); and
if control information intended for the network system is included in a received burst, performing a corresponding function (S82).

2. The method of claim 1, wherein the information transmitted to the mobile terminals includes a burst structure type, with the burst structure containing at least one control section for carrying control information intended for the network system.

3. The method of claim 2, wherein the burst structure further contains a control section for carrying control information intended for a mobile terminal.

4. The method of claim 1, wherein the information transmitted to the mobile terminals includes a burst structure type, with the burst structure containing at least one control section and a flag section, the flag section containing information indicating whether the control section carrying control information is intended for the network system.

5. The method of claim 4, wherein the burst structure further contains a control section for carrying control information intended for a mobile terminal.

6. The method of claim 1, further comprising a step of, after the direct communication is established, transmitting control commands to the mobile terminals for maintaining synchronization with the network system in uplink.

7. A method performed by a mobile terminal (UE1, UE2) for allowing a wireless communication network system to maintain a uplink control in peer-to-peer communication, the method comprising the steps of:
receiving information including control commands from the network system to establish a direct communication link with another mobile terminal (S102); **characterised in** the steps of
determining whether control information needs to be sent to the network system after the direct communication link is established between the mobile terminals (S122); and
if control information needs to be sent to the network system, adding control information intended for the network system in a burst to be communicated to the other mobile terminal (S126).

8. The method of claim 7, wherein the information received includes a burst structure type, with the burst structure containing at least one control section for carrying control information intended for the network system.

9. The method of claim 8, wherein the burst structure further contains a control section for carrying control information intended for a mobile terminal.

10. The method of claim 7, wherein the information received includes a burst structure type, with the burst structure containing at least one control section and a flag section, the flag section containing information indicating whether the control section carrying control information is intended for the network system.

11. The method of claim 10, wherein the burst structure further contains a control section for carrying control information intended for a mobile terminal.

12. The method of claim 7, further comprising a step of receiving control commands for maintaining synchronization with the network system in uplink.

13. A wireless communication network system, comprising:
means for receiving a request from a mobile terminal (UE1, UE2) for establishing peer-to-peer communication with another mobile terminal;
means for determining whether a reliable direct communication link can be set up between the mobile terminals;
means for transmitting information including control commands to the mobile terminals for establishing direct communication, the transmitting means transmitting the information to the mobile terminals if a reliable direct communication link can be set up between the mobile terminals; **characterised in that** it includes
means for continuously listening to signals communicated between the mobile terminals to receive bursts after the direct communication is established between the mobile terminals;
means for demodulating received bursts that are communicated between the two mobile terminals to determine whether a received burst contains control information intended for the network system; and
means for performing a corresponding function, the performing means performing the corresponding function if control information intended for the network system is included in a received burst.

14. The system of claim 13, wherein the information transmitted to the mobile terminals includes a burst structure type, with the burst structure containing at least one control section for carrying control information intended for the network system.

15. The system of claim 14, wherein the burst structure further contains a control section for carrying control information intended for a mobile terminal.

16. The system of claim 13, wherein the information transmitted to the mobile terminals includes a burst structure type, with the burst structure containing at least one control section and a flag section, the flag section containing information indicating whether the control section carrying control information is intended for the network system.

17. The system of claim 16, wherein the burst structure further contains a control section for carrying control information intended for a mobile terminal.

18. The system of claim 13, further comprising a step of, after the direct communication is established, transmitting control commands to the mobile terminals for maintaining synchronization with the network system in uplink.

19. A mobile terminal (UE1, UE2), comprising:
means for receiving information including control commands from a network system to establish a direct communication link with another mobile terminal; **characterised in that** it includes
means for determining whether control information needs to be sent to the network system after the direct communication link is established between the mobile terminals; and
means for adding control information intended for the network system in a burst to be communicated to the other mobile terminal, the adding means adds the control information intended for the network system if control information needs to be sent to the network system.

20. The terminal of claim 19, wherein the information received includes a burst structure type, with the burst structure containing at least one control section for carrying control information intended for the network system.

21. The terminal of claim 20, wherein the burst structure further contains a control section for carrying control information intended for a mobile terminal.

22. The terminal of claim 19, wherein the information received includes a burst structure type, with the burst structure containing at least one control section and a flag section, the flag section containing information indicating whether the control section carrying control information is intended for the network system.

23. The terminal of claim 22, wherein the burst structure further contains a control section for carrying control information intended for a mobile terminal.

24. The terminal of claim 19, further comprising means for receiving control commands for maintaining synchronization with the network system in uplink.

## Patentansprüche

1. Verfahren, welches von einem drahtlosen Kommunikationsnetzwerksystem zum Unterhalten der Kontrolle in Aufwärtsrichtung für mobile Endgeräte (UE1, UE2) durchgeführt wird, das Verfahren die folgenden Schritte umfassend:
Empfangen einer Anforderung von einem mobilen Endgerät zum Einrichten einer Peer-to-Peer-Kommunikation mit einem anderen mobilen Endgerät (S52),
Feststellen, ob eine zuverlässige Direktkommunikationsverbindung zwischen den mobilen Endgeräten aufgebaut werden kann (S54),
falls eine zuverlässige Direktkommunikationsverbindung zwischen den mobilen Endgeräten aufgebaut werden kann, Übertragen von Informationen, welche Steuerungsbefehle umfassen, an die mobilen Endgeräte zum Einrichten einer Direktkommunikation (S56), **dadurch gekennzeichnet, dass**
nachdem die Direktkommunikation zwischen den mobilen Endgeräten eingerichtet ist, kontinuierlich den Signalen gelauscht wird, welche zwischen den mobilen Endgeräten kommuniziert werden, um Bursts zu empfangen (S66);
empfangene Bursts, welche zwischen den beiden mobilen Endgeräten kommuniziert werden, demoduliert werden, um festzustellen, ob ein empfangener Burst Steuerungsinformationen enthält, welche für das Netzwerksystem vorgesehen sind (S76); und
falls Steuerungsinformationen, welche für das Netzwerksystem vorgesehen sind, in einem empfangenen Burst eingeschlossen sind, das Netzwerk eine entsprechende Funktion durchführt (S82).

2. Verfahren nach Anspruch 1, wobei die Informationen, welche an die mobilen Endgeräte übertragen werden, einen Burst-Strukturtyp aufweisen, wobei die Burst-Struktur mindestens einen Steuerungsabschnitt zum Tragen von Steuerungsinformationen enthält, welche für das Netzwerksystem vorgesehen sind.

3. Verfahren nach Anspruch 2, wobei die Burst-Struktur weiterhin einen Steuerungsabschnitt zum Tragen von Steuerungsinformationen enthält, welche für ein mobiles Endgerät vorgesehen sind.

4. Verfahren nach Anspruch 1, wobei die Informationen, welche an die mobilen Endgeräte übertragen werden, einen Burst-Strukturtyp aufweisen, wobei die Burst-Struktur mindestens einen Steuerungsabschnitt und einen Kennzeichenabschnitt enthält, wobei der Kennzeichenabschnitt Informationen enthält, welche angeben, ob der Steuerungsabschnitt, welcher Steuerungsinformationen trägt, für das Netzwerksystem vorgesehen ist.

5. Verfahren nach Anspruch 4, wobei die Burst-Struktur weiterhin einen Steuerungsabschnitt zum Tragen von Steuerungsinformationen enthält, welche für ein mobiles Endgerät vorgesehen sind.

6. Verfahren nach Anspruch 1, weiterhin umfassend einen Schritt des Übertragens von Steuerungsbefehlen an die mobilen Endgeräte zum Unterhalten einer Synchronisation mit dem Netzwerksystem in Aufwärtsrichtung, nachdem die Direktkommunikation eingerichtet ist.

7. Verfahren, welches von einem mobilen Endgerät (UE1, UE2) durchgeführt wird, um einem drahtlosen Kommunikationsnetzwerksystem zu ermöglichen, eine Kontrolle in Aufwärtsrichtung bei einer Peer-to-Peer-Kommunikation zu unterhalten, das Verfahren die folgenden Schritte umfassend:
Empfangen von Informationen, welche Steuerungsbefehle aufweisen, von dem Netzwerksystem, um eine Direktkommunikationsverbindung mit einem anderen mobilen Endgerät (S 102) einzurichten, **gekennzeichnet durch** die folgenden Schritte:
Feststellen, ob Steuerungsinformationen an das Netzwerksystem gesendet werden müssen, nachdem die Direktkommunikationsverbindung zwischen den mobilen Endgeräten eingerichtet ist (S122); und
falls Steuerungsinformationen an das Netzwerksystem gesendet werden müssen, Hinzufügen von Steuerungsinformationen, welche für das Netzwerksystem vorgesehen sind, zu einem Burst, um an das andere mobile Endgerät kommuniziert zu werden (S 126).

8. Verfahren nach Anspruch 7, wobei die empfangenen Informationen einen Burst-Strukturtyp aufweisen, wobei die Burst-Struktur mindestens einen Steuerungsabschnitt zum Tragen von Steuerungsinformationen enthält, welche für das Netzwerksystem vorgesehen sind.

9. Verfahren nach Anspruch 8, wobei die Burst-Struktur weiterhin einen Steuerungsabschnitt zum Tragen von Steuerungsinformationen enthält, welche für ein mobiles Endgerät vorgesehen sind.

10. Verfahren nach Anspruch 7, wobei die empfangenen Informationen einen Burst-Strukturtyp aufweisen, wobei die Burst-Struktur mindestens einen Steuerungsabschnitt und einen Kennzeichenabschnitt enthält, wobei der Kennzeichenabschnitt Informationen enthält, welche angeben, ob der Steuerungsabschnitt, welcher Steuerungsinformationen trägt, für das Netzwerksystem vorgesehen ist.

11. Verfahren nach Anspruch 10, wobei die Burst-Struktur weiterhin einen Steuerungsabschnitt zum Tragen von Steuerungsinformationen enthält, welche für ein mobiles Endgerät vorgesehen sind.

12. Verfahren nach Anspruch 7, weiterhin umfassend einen Schritt des Empfangens von Steuerungsbefehlen zum Unterhalten einer Synchronisation mit dem Netzwerksystem in Aufwärtsrichtung.

13. Drahtloses Kommunikationsnetzwerksystem, umfassend:
Mittel zum Empfangen einer Aufforderung von einem mobilen Endgerät (UE1, UE2) zum Einrichten einer Peer-to-Peer-Kommunikation mit einem anderen mobilen Endgerät;
Mittel zum Feststellen, ob eine zuverlässige Direktkommunikationsverbindung zwischen den mobilen Endgeräten aufgebaut werden kann;
Mittel zum Übertragen von Informationen, welche Steuerungsbefehle aufweisen, an die mobilen Endgeräte zum Einrichten einer Direktkommunikation, wobei das Übertragungsmittel die Informationen an die mobilen Endgeräte überträgt, falls eine zuverlässige Direktkommunikationsverbindung zwischen den mobilen Endgeräten aufgebaut werden kann; **dadurch gekennzeichnet, dass** es Folgendes aufweist:
Mittel zum kontinuierlichen Lauschen auf Signale, welche zwischen den mobilen Endgeräten kommuniziert werden, um Bursts zu empfangen, nachdem die Direktkommunikation zwischen den mobilen Endgeräten eingerichtet ist;
Mittel zum Demodulieren empfangener Bursts, welche zwischen den beiden mobilen Endgeräten kommuniziert werden, um festzustellen, ob ein empfangener Burst Steuerungsinformationen enthält, welche für das Netzwerksystem vorgesehen sind; und
Mittel zum Durchführen einer entsprechenden Funktion, wobei das Durchführungsmittel die entsprechende Funktion durchführt, falls Steuerungsinformationen, welche für das Netzwerksystem vorgesehen sind, in einem empfangenen Burst eingeschlossen sind.

14. System nach Anspruch 13, wobei die Informationen, welche an die mobilen Endgeräte übertragen werden, einen Burst-Strukturtyp aufweisen, wobei die Burst-Struktur mindestens einen Steuerungsabschnitt zum Tragen von Steuerungsinformationen enthält, welche für das Netzwerksystem vorgesehen sind.

15. System nach Anspruch 14, wobei die Burst-Struktur weiterhin einen Steuerungsabschnitt zum Tragen von Steuerungsinformationen enthält, welche für ein mobiles Endgerät vorgesehen sind.

16. System nach Anspruch 13, wobei die Informationen, welche an die mobilen Endgeräte übertragen werden, einen Burst-Strukturtyp aufweisen, wobei die Burst-Struktur mindestens einen Steuerungsabschnitt und einen Kennzeichenabschnitt enthält, wobei der Kennzeichenabschnitt Informationen enthält, welche angeben, ob der Steuerungsabschnitt, welcher Steuerungsinformationen trägt, für das Netzwerksystem vorgesehen ist.

17. System nach Anspruch 16, wobei die Burst-Struktur weiterhin einen Steuerungsabschnitt zum Tragen von Steuerungsinformationen enthält, welche für ein mobiles Endgerät vorgesehen sind.

18. System nach Anspruch 13, weiterhin umfassend einen Schritt des Übertragens von Steuerungsbefehlen an die mobilen Endgeräte zum Unterhalten einer Synchronisation mit dem Netzwerksystem in Aufwärtsrichtung, nachdem die Direktkommunikation eingerichtet ist.

19. Mobiles Endgerät (UE1, UE2), Folgendes umfassend:
Mittel zum Empfangen von Informationen, welche Steuerungsbefehle aufweisen, von einem Netzwerksystem, um eine Direktkommunikationsverbindung mit einem anderen mobilen Endgerät einzurichten; **dadurch gekennzeichnet, dass** es Folgendes aufweist:
Mittel zum Feststellen, ob Steuerungsinformationen an das Netzwerksystem gesendet werden müssen, nachdem die Direktkommunikationsverbindung zwischen den mobilen Endgeräten eingerichtet ist; und
Mittel zum Hinzufügen von Steuerungsinformationen, welche für das Netzwerksystem vorgesehen sind, zu einem Burst, welcher an das andere mobile Endgerät kommuniziert werden soll, wobei das Hinzufügungsmittel die Steuerungsinformationen, welche für das Netzwerksystem vorgesehen sind, hinzufügt, falls Steuerungsinformationen an das Netzwerksystem gesendet werden müssen.

20. Endgerät nach Anspruch 19, wobei die empfangenen Informationen einen Burst-Strukturtyp aufweisen, wobei die Burst-Struktur mindestens einen Steuerungsabschnitt zum Tragen von Steuerungsinformationen enthält, welche für das Netzwerksystem vorgesehen sind.

21. Endgerät nach Anspruch 20, wobei die Burst-Struktur weiterhin einen Steuerungsabschnitt zum Tragen von Steuerungsinformationen enthält, welche für ein mobiles Endgerät vorgesehen sind.

22. Endgerät nach Anspruch 19, wobei die empfangenen Informationen einen Burst-Strukturtyp aufweisen, wobei die Burst-Struktur mindestens einen Steuerungsabschnitt und einen Kennzeichenabschnitt enthält, wobei der Kennzeichenabschnitt Informationen enthält, welche angeben, ob der Steuerungsabschnitt, welcher Steuerungsinformationen trägt, für das Netzwerksystem vorgesehen ist.

23. Endgerät nach Anspruch 22, wobei die Burst-Struktur weiterhin einen Steuerungsabschnitt zum Tragen von Steuerungsinformationen enthält, welche für ein mobiles Endgerät vorgesehen sind.

24. Endgerät nach Anspruch 19, weiterhin umfassend Mittel zum Empfangen von Steuerungsbefehlen zum Unterhalten einer Synchronisation mit dem Netzwerksystem in Aufwärtsrichtung.

## Revendications

1. Procédé exécuté par un système de réseau de communication sans fil pour maintenir une commande de liaison montante pour des terminaux mobiles (UE1, UE2), le procédé comprenant les étapes suivantes :
la réception d'une requête venant d'un terminal mobile pour établir une communication d'égal à égal avec un autre terminal mobile (S52);
le fait de déterminer si une liaison de communication directe fiable peut être établie entre les terminaux mobiles (S54);
si une liaison de communication directe fiable peut être établie entre les terminaux mobiles, la transmission d'informations incluant des commandes de contrôle aux terminaux mobiles pour établir une communication directe (S56); **caractérisé en ce que**
une fois la communication directe établie entre les terminaux mobiles, l'écoute continue de signaux échangés entre les terminaux mobiles pour recevoir des rafales (S66);
la démodulation de rafales reçues qui sont échangées entre les deux terminaux mobiles pour déterminer si une rafale reçue contient des informations de commande destinées au système de réseau (S76), et
si des informations de commande destinées au système de réseau sont incluses dans une rafale reçue, l'exécution d'une fonction correspondante (S82).

2. Procédé suivant la revendication 1, dans lequel les informations transmises aux terminaux mobiles incluent un type de structure de rafale, la structure de rafale contenant au moins une section de commande pour acheminer des informations de commande destinées au système de réseau.

3. Procédé suivant la revendication 2, dans lequel la structure de rafale contient en outre une section de commande pour acheminer des informations de commande destinées à un terminal mobile.

4. Procédé suivant la revendication 1, dans lequel les informations transmises aux terminaux mobiles incluent un type de structure de rafale, la structure de rafale contenant au moins une section de commande et une section de drapeau, la section de drapeau contenant des informations indiquant si la section de commande acheminant des informations de commande est destinée au système de réseau.

5. Procédé suivant la revendication 4, dans lequel la structure de rafale contient en outre une section de commande pour acheminer des informations de commande destinées à un terminal mobile.

6. Procédé suivant la revendication 1, comprenant en outre une étape, une fois la communication directe établie, de transmission de commandes de contrôle aux terminaux mobiles pour maintenir une synchronisation avec le système de réseau sur la liaison montante.

7. Procédé exécuté par un terminal mobile (UE1, UE2) pour permettre à un système de réseau de communication sans fil de maintenir une commande de liaison montante dans une communication d'égal à égal, le procédé comprenant les étapes suivantes :
la réception d'informations incluant des commandes de contrôle venant du système de réseau pour établir une liaison de communication directe avec un autre terminal mobile (S 102); **caractérisé par** les étapes suivantes :
le fait de déterminer si des informations de commande doivent être envoyées au système de réseau après que la liaison de communication directe a été établie entre les terminaux mobiles (S 122), et
si des informations de commande doivent être envoyées au système de réseau, l'ajout d'informations de commande destinées au système de réseau dans une rafale à transmettre à l'autre terminal mobile (S 126).

8. Procédé suivant la revendication 7, dans lequel les informations reçues incluent un type de structure de rafale, la structure de rafale contenant au moins une section de commande pour acheminer des informations de commande destinées au système de réseau.

9. Procédé suivant la revendication 8, dans lequel la structure de rafale contient en outre une section de commande pour acheminer des informations de commande destinées à un terminal mobile.

10. Procédé suivant la revendication 7, dans lequel les informations reçues incluent un type de structure de rafale, la structure de rafale contenant au moins une section de commande et une section de drapeau, la section de drapeau contenant des informations indiquant si la section de commande acheminant des informations de commande est destinée au système de réseau.

11. Procédé suivant la revendication 10, dans lequel la structure de rafale contient en outre une section de commande pour acheminer des informations de commande destinées à un terminal mobile.

12. Procédé suivant la revendication 7, comprenant en outre une étape de réception de commandes de contrôle pour maintenir une synchronisation avec le système de réseau sur la liaison montante.

13. Système de réseau de communication sans fil, comprenant :
des moyens pour recevoir une requête venant d'un terminal mobile (UE1, UE2) pour établir une communication d'égal à égal avec un autre terminal mobile;
des moyens pour déterminer si une liaison de communication directe fiable peut être établie entre les terminaux mobiles;
des moyens pour transmettre des informations incluant des commandes de contrôle aux terminaux mobiles pour établir une communication directe, les moyens de transmission transmettant les informations aux terminaux mobiles si une liaison de communication directe fiable peut être établie entre les terminaux mobiles; **caractérisé en ce qu'**il comprend
des moyens pour écouter en continu des signaux échangés entre les terminaux mobiles pour recevoir des rafales après que la communication directe a été établie entre les terminaux mobiles;
des moyens pour démoduler des rafales reçues qui sont échangées entre les deux terminaux mobiles pour déterminer si une rafale reçue contient des informations de commande destinées au système de réseau, et
des moyens pour exécuter une fonction correspondante, les moyens d'exécution exécutant la fonction correspondante si des informations de commande destinées au système de réseau sont incluses dans une rafale reçue.

14. Système suivant la revendication 13, dans lequel les informations transmises aux terminaux mobiles incluent un type de structure de rafale, la structure de rafale contenant au moins une section de commande pour acheminer des informations de commande destinées au système de réseau.

15. Système suivant la revendication 14, dans lequel la structure de rafale contient en outre une section de commande pour acheminer des informations de commande destinées à un terminal mobile.

16. Système suivant la revendication 13, dans lequel les informations transmises aux terminaux mobiles incluent un type de structure de rafale, la structure de rafale contenant au moins une section de commande et une section de drapeau, la section de drapeau contenant des informations indiquant si la section de commande acheminant des informations de commande est destinée au système de réseau.

17. Système suivant la revendication 16, dans lequel la structure de rafale contient en outre une section de commande pour acheminer des informations de commande destinées à un terminal mobile.

18. Système suivant la revendication 13, comprenant en outre une étape, une fois la communication directe établie, de transmission de commandes de contrôle aux terminaux mobiles pour maintenir une synchronisation avec le système de réseau sur la liaison montante.

19. Terminal mobile (UE1, UE2), comprenant :
des moyens pour recevoir des informations incluant des commandes de contrôle venant d'un système de réseau pour établir une liaison de communication directe avec un autre terminal mobile; **caractérisé en ce qu'**il comprend
des moyens pour déterminer si des informations de commande doivent être envoyées au système de réseau après que la liaison de communication directe a été établie entre les terminaux mobiles, et
des moyens pour ajouter des informations de commande destinées au système de réseau dans une rafale à transmettre à l'autre terminal mobile, les moyens d'ajout ajoutant les informations de commande destinées au système de réseau si des informations de commande doivent être envoyées au système de réseau.

20. Terminal suivant la revendication 19, dans lequel les informations reçues incluent un type de structure de rafale, la structure de rafale contenant au moins une section de commande pour acheminer des informations de commande destinées au système de réseau.

21. Terminal suivant la revendication 20, dans lequel la structure de rafale contient en outre une section de commande pour acheminer des informations de commande destinées à un terminal mobile.

22. Terminal suivant la revendication 19, dans lequel les informations reçues incluent un type de structure de rafale, la structure de rafale contenant au moins une section de commande et une section de drapeau, la section de drapeau contenant des informations indiquant si la section de commande acheminant des informations de commande est destinée au système de réseau.

23. Terminal suivant la revendication 22, dans lequel la structure de rafale contient en outre une section de commande pour acheminer des informations de commande destinées à un terminal mobile.

24. Terminal suivant la revendication 19, comprenant en outre des moyens pour recevoir des commandes de contrôle pour maintenir une synchronisation avec le système de réseau sur la liaison montante.
